# EUROPEAN PATENT SPECIFICATION

(11) **EP 0 349 293 B1**
(45) Date of publication and mention of the grant of the patent: **18.11.1993**
(21) Application number: 89306557.3
(22) Date of filing: 27.06.1989
(51) Int. Cl.: G11B 15/17, G11B 15/675, G11B 15/06, G11B 23/087

(54) **Tape cassette attachement devices**
Vorrichtungen zur Befestigung einer Bandkassette
Dispositifs de fixation de cassette à bande

(30) Priority: 28.06.1988 JP 160286/88
(43) Date of publication of application: 03.01.1990
(73) Proprietor: SONY CORPORATION, Tokyo 141 (JP)
(72) Inventor: Chigasaki, Hiroyuki, Shinagawa-ku Tokyo 141 (JP)
(74) Representative: Pilch, Adam John Michael

(56) References cited:
- GB-A- 2 185 142
- US-A- 3 936 011
- US-A- 4 734 800
- PATENT ABSTRACTS OF JAPAN vol. 11, no. 147 (P-575)(2594) 14 May 1987, & JP-A-61 283060 (SONY CORP.) 13 December 1986,
- PATENT ABSTRACTS OF JAPAN vol. 9, no. 127 (P-360)(1850) 31 May 1985, & JP-A-60 010447 (HITACHI SEISAKUSHO K.K.) 19 January 1985,
- PATENT ABSTRACTS OF JAPAN vol. 10, no. 34 (P-427)(2091) 8 February 1986, & JP-A-60 182541 (TOSHIBA K.K.) 18 September 1985,

## Description

The invention relates to a tape cassette attachment device in combination with a tape cassette suitable for use in magnetic recording/reproducing apparatus such as a cassette- type tape recorder in which a cassette holder is provided into which the tape cassette is inserted.

In the case of a digital audio tape (DAT) recorder, including a rotary magnetic head device, the tape cassette used in the DAT recorder has a structure capable of completely sealing and thus protecting the magnetic tape during non-use, that is when the tape cassette is not inserted in the recorder. The front or tape extracting side of the tape cassette includes a front cover that may be pivoted to open or close the front side, while its bottom side is covered by a closure plate that may be slid to open or close the reel drive shaft insertion openings.

In magnetic recording/reproducing apparatus such as the DAT recorder described above, in order for the tape cassette to be inserted in the recorder and engaged with the reel drive shafts, it is necessary initially for the closure plate to be shifted to its open position so as to open the reel drive shaft inserting openings before the tape cassette can be fully inserted and engaged in the tape cassette attachment position.

It is known for DAT recorders to be provided with a tape cassette attachment device such that the tape cassette is attached at its predetermined tape cassette attachment position as the closure plate is shifted to open the reel drive shaft insertion openings. The applicants have proposed this type of tape cassette attachment device in Japanese Unexamined Patent Publication No. 61-283 060/1986 and Japanese Unexamined Utility Model Publication No. 62-147 156/1987. In the tape cassette attachment device disclosed therein, the cassette holder in which the tape cassette is inserted and held is provided with means for opening or closing the closure plate which is shifted to its open position as the cassette holder is fed towards the main body of the apparatus, thereby opening the reel drive shaft insertion openings. However, it is necessary, after the closure plate has been shifted to open the reel drive shaft insertion openings and the tape reel in the tape cassette has been enabled to engage with the reel drive shafts of the recording/reproducing apparatus, for the cassette holder holding the tape cassette to be then moved towards and into the tape cassette attachment position.

According to the invention there is provided a tape cassette attachment device in combination with a tape cassette and comprising:
a cassette holder to retain the tape cassette, which tape cassette rotatably accommodates a pair of tape reels having a magnetic tape wound thereon and has a closure plate, movable between a closed position covering a pair of reel drive shaft insertion openings formed at least in the bottom surface of the tape cassette and an open position uncovering the reel drive shaft insertion openings, mounted on the outer bottom surface of the tape cassette, and a pivotable lid provided to open or close an aperture in the front of the tape cassette, the cassette holder including control projection means on a bottom plate thereof, the control projection means controlling movement of the closure plate in opposition to insertion movement of the tape cassette and shifting the closure plate from the closed position to the open position when the tape cassette is inserted;
a slide guide frame to support the cassette holder for vertical movement and being supported for reciprocation with respect to a chassis, the slide guide frame being reciprocatable between a first position in which the tape cassette may be inserted into or detached from the cassette holder and a second position in which the tape reels of the tape cassette are in register with reel drive shafts on the chassis, the cassette holder being vertically shifted between the first position and the second position;
locking and holding means to lock and hold the slide guide frame at the first position with respect to the chassis to inhibit shifting of the slide guide frame; and
sensing means to sense tape cassette insertion and being operable to sense that the tape cassette has been inserted to a determined position in the cassette holder, thereby releasing locking of the locking and holding means;
characterised in that the sensing means to sense tape cassette insertion comprises a mating thrust section provided at a position more inward in the apparatus than the position at which the control projection means of the cassette holder are provided, such that only when the closure plate has been shifted so that the reel drive shaft insertion openings are opened completely can the tape cassette abut the mating thrust section to release the locking of the locking and holding means.

A preferred embodiment of the invention, to be described in greater detail hereinafter, provides a tape cassette attachment device in which a tape cassette provided with a closure plate is shifted horizontally and vertically for accurately inserting and holding the tape cassette at a prescribed position within the cassette holder.

Preferably, shifting of the cassette holder is enabled only when the closure plate is shifted to open the reel drive shaft insertion openings, thus providing a safe and positive tape cassette attachment operation. In such a device, protection of the mechanical portions of the apparatus and the tape cassette may be achieved. Also, insertion of the tape cassette into the cassette holder may be detected by a relatively simple structure.

The invention will now be described by way of example with reference to the accompanying drawings, throughout which like parts are referred to by like references, and in which:
Figure 1 is a plan view of a DAT recorder to which an embodiment of the present invention is applied;
Figure 2 is an exploded perspective view showing a tape cassette attachment device for the DAT recorder shown in Figure 1;
Figure 3 is a plan view showing the state of inserting a tape cassette into a cassette holder in the recorder shown in Figure 1;
Figure 4 is a plan view showing the state in which the tape cassette is inserted into and held in the cassette holder shown in Figure 3;
Figure 5 is a left side elevational view showing the cassette holder in a first position;
Figure 6 is a right side elevational view showing the cassette holder in the first position;
Figure 7 is a plan view showing the state in which the cassette holder is moved to a second position;
Figure 8 is a right side elevational view showing the state in which the cassette holder is moved to the second position;
Figure 9 is a plan view showing the state in which a slide guide frame is moved to an innermost lateral position;
Figure 10 is a right side elevational view showing the state in which the cassette holder is moved to a tape attachment position;
Figure 11 is a right side elevational view showing the state in which the cassette holder is moved to the tape cassette attachment position;
Figure 12 is an exploded perspective view showing a unit for reciprocating the slide guide frame;
Figure 13 is a diagrammatic side elevational view showing a unit for sensing tape cassette insertion and support, in a state in which the tape cassette is introduced and the slide guide frame is locked;
Figure 14 is a view similar to Figure 13, but showing the state in which the tape cassette is introduced and sensed and the slide guide frame is released from its locked state;
Figure 15 is a perspective view of a unit for opening a front lid for the tape cassette, showing a state before the opening operation;
Figure 16 is a back side view of the unit shown in Figure 15;
Figure 17 is a perspective view of the unit of Figures 15 and 16 showing the closed state of the front lid;
Figure 18 is an exploded perspective view from the bottom surface of the tape cassette ejection unit;
Figure 19 is a plan view showing ejection of the tape cassette from the cassette holder;
Figure 20 illustrates a perspective view of the tape cassette from the upper side thereof when the tape cassette is not in use;
Figure 21 is a perspective view of the tape cassette from the lower side thereof when the tape cassette is not in use;
Figure 22 is a perspective view of the tape cassette with the front lid open; and
Figure 23 is a bottom side view of the tape cassette showing a closure plate covering a reel drive shaft inserting opening.

The present invention will be described with reference to an example applied to a DAT recorder provided with a rotary magnetic head device.

For satisfactory protection of a magnetic tape accommodated within a cassette part, the tape cassette should be completely sealed when it is out of use, such as during the storage period when it is not inserted in the tape recorder.

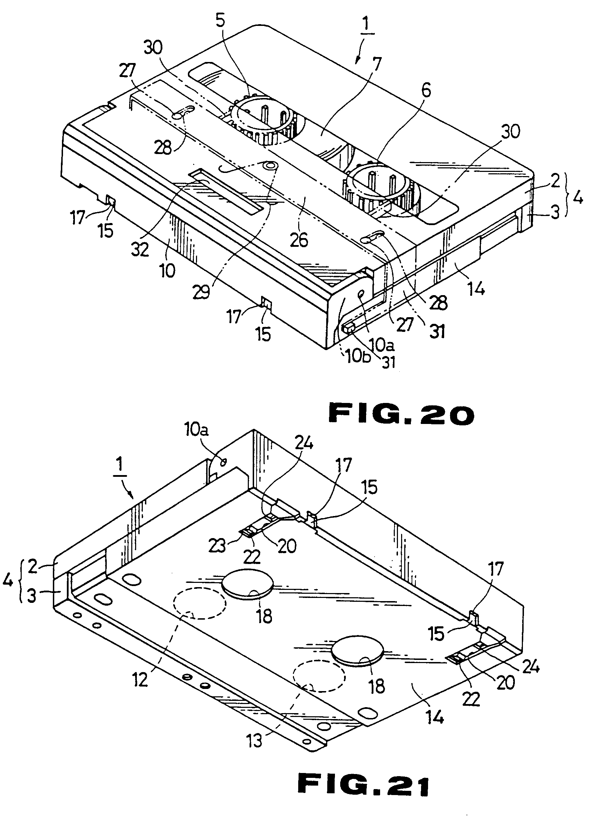

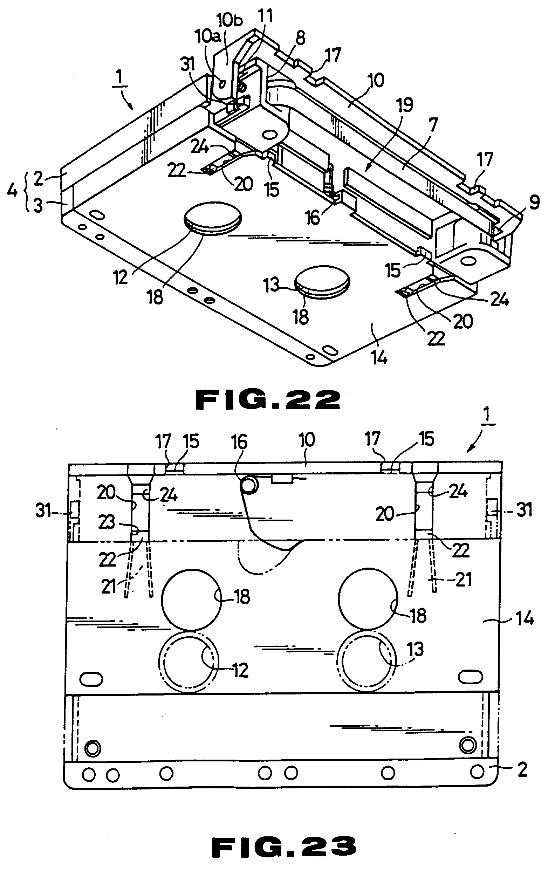

Thus, as shown in Figures 20 to 23, a tape cassette 1 includes a cassette part 4 formed by an upper half 2 and a lower half 3 abutted and secured to each other. A pair of tape reels 5 and 6 are rotatably supported within the cassette part 4 and a magnetic tape 7 is wound on the tape reels 5 and 6. The magnetic tape 7 is extended outwardly on the front side of the cassette part 4 via tape extraction openings 8 and 9 at either end of the front side of the cassette part 4, so as to be wound from the tape reel 5 to the other tape reel 6. On the front side of the cassette part 4, a front lid 10 is rotatably mounted for protecting the magnetic tape 7 extending across the front side of the cassette part 4 at the time of non-attachment of the tape cassette 1 to the tape recorder. As shown in Figure 22, the front lid 10 is rotationally biased in a direction for covering the magnetic tape 7 extending across the front side of the cassette part 4.

Referring to Figures 21 to 23, a closure plate 14 having a U-shaped cross-section is provided on the bottom side of the cassette part 4 for sliding back and forth, and for normally closing reel drive shaft insertion openings 12 and 13 formed in the bottom surface of the cassette part 4 to prevent intrusion of dust and dirt into the cassette part 4, thereby protecting the magnetic tape 7. The edge of the closure plate 14 is formed with a pair of lugs 15 which, when an urging action is imparted from a torsion spring 16 mounted to the cassette part 4 for causing movement towards the front side of the cassette part 4 in a direction for closing the reel drive shaft inserting openings 12 and 13, are engaged with the front side of the cassette part 4, as shown in Figure 23, for regulating the shift position of the closure plate 14. The lower edge of the front lid 10, at positions aligned with the lugs 15, is formed with recesses 17 acting to provide clearance when the cassette part 4 is shifted relative to the closure plate 14.

The planar surface of the closure plate 14 is formed with a pair of insertion openings 18 which may be in register with the reel shaft insertion openings 12, 13 formed in the bottom plate of the lower half 3, as shown by double-dotted chain lines in Figure 23, when the closure plate 14 performs a relative movement towards the rear side of the cassette part 4, so that the reel driving shafts provided in the tape recorder may be introduced into the cassette part 4 via the reel drive shaft insertion openings 12 and 13 so as to be engaged with the tape reels 5, 6. When the closure plate 14 is shifted forwards to close the lower side of a spacing 19 confronted by a tape extraction unit (not shown) of a loading mechanism provided in the tape recorder for extracting the magnetic tape 7 outwardly of the cassette part 4, the insertion openings 18 of the closure plate 14 and the reel drive shaft insertion openings 12, 13 are out of register with each other so that the reel drive shaft insertion openings 12, 13 are closed by the planar surface of the closure plate 14, as shown in Figure 21.

The closure plate 14 is provided with recesses or grooves 20 into which ribs (not shown) can be fitted, the ribs being provided on the bottom plate of the cassette holder of the tape recorder, as described later. These ribs act as means for disengaging an engaging unit of the closure plate 14. The recesses 20 are formed for opening at the forward edge of the closure plate 14 and for extending a certain distance in the fore and aft direction, that is the shifting direction of the closure plate 14. In each of the recesses 20, there are formed an engaging opening 23 and an engaging recess 24 into which is engaged a retaining projection 22 of a locking member 21 provided on the cassette part 4 for retaining the closure-plate 14 not only at the closure position of closing the spacing 19 of the cassette part 4 and the reel drive shaft insertion openings 12, 13 by the closure plate 14, but also at the open position of the spacing 19 and the insertion openings 12, 13. The bottom plate of the lower half 3 is formed with a U-shaped groove so that the locking member 21 has an integral hemispherical engaging projection on the lower side of the forward end, with the rear end being connected to the bottom plate of the lower half 3.

When the closure plate 14 is closed as shown in Figures 21 and 23, the retaining projection 22 at the forward side of the locking member 21 is engaged in the engaging opening 23 formed in the closure plate 14 for retaining the closure plate 14 against movement towards the open position.

Within the cassette part 4, a reel lock lever 26, designed to prevent inadvertent rotation of the tape reels 5, 6 during non-attachment to the tape recorder and to avoid the consequent loosening and possible damage to the magnetic tape 7, is provided for extending in the widthwise direction on the inner lateral side of the upper half 2, as shown in Figure 20. The reel lock lever 26 is supported for sliding movement back and forth with respect to the tape reels 5 and 6, with a pair of slide guide pins 27 on the inner lateral side of the upper half 2 engaging in elongated apertures 28, and is urged by a torsion coil spring 29 provided on the inner lateral side of the upper half 2 in the direction of the tape reels 5 and 6. The tape reels 5 and 6 are locked against rotation by thrust members 30 formed on one side of the reel lock lever 26 which are pressured on to the outer periphery of the upper ends of the tape reels 5 and 6. A pair of shifting arms 31 engagable with rotary members 10b of the front lid 10 at the time of the opening operation of the lid 10 are formed on both sides of the reel lock lever 26 for extending back and forth on the lateral side of the cassette part 4. When the front lid 10 is operated for opening the front side of the cassette part 4, as shown in Figure 22, the shift arm 31 is moved forwardly of the cassette part 4 by the rotary members 10b of the front lid 10, the reel lock lever 26 being shifted in a direction away from the tape reels 5, 6 against the bias of the torsion coil spring 29. This shifting of the reel lock lever 26 releases the pressure on the tape reels 5, 6 by the thrust members 30, so that the tape reels 5, 6 are free to rotate and thereby enable the tape 7 to be reeled from the cassette part 4.

On the upper surface of the cassette part 4 and at the transverse centre towards the front lid 10 is formed a rectangular engaging recess 32. The recess 32 is provided, in the tape cassette attachment device in which the tape cassette 1 is drawn from the tape cassette inserting and removing position to the tape cassette attaching position using a draw-in lever, so that an engaging pawl provided at the foremost part of the draw-in lever may be engaged with the recess 32.

The tape cassette 1 is attached at the tape cassette attachment position within the main body of the tape recorder by means of a cassette holder which is movable horizontally and vertically between the tape cassette inserting and removing position and the tape cassette attachment position.

The insertion and holding of the tape cassette 1 within the cassette holder results in relative movement between the cassette part 4 and the closure plate 14, thereby opening the reel drive shaft insertion openings 12, 13. Also, the shifting of the cassette holder to the tape cassette attachment position results in the front lid 10 being pivoted to open the front side of the cassette part 4, thereby causing the tape 7 to be exposed and allowing it to be extracted to the outside.

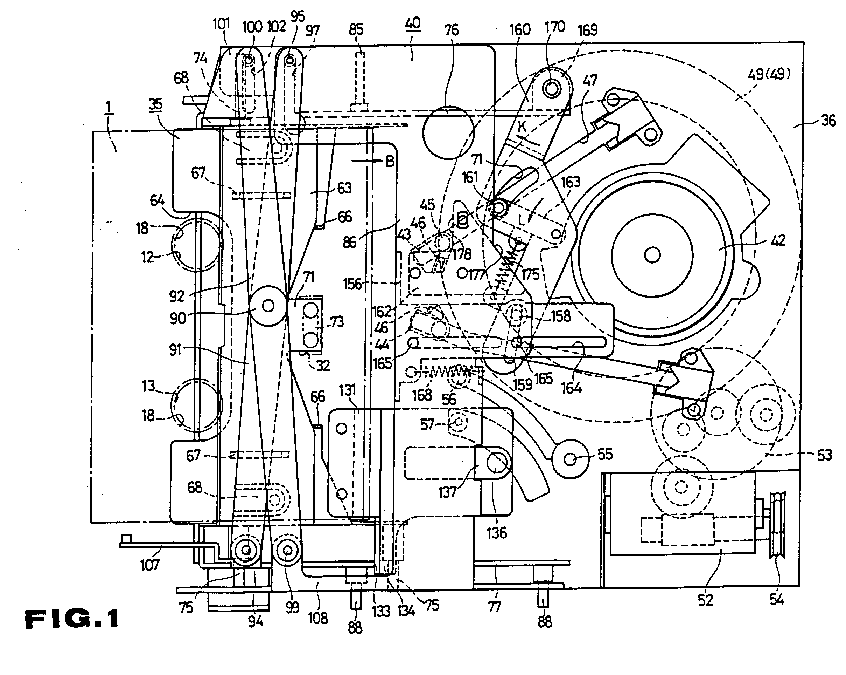

A DAT recorder provided with the rotary magnetic head device to which the present invention is applied is shown in Figures 1 to 4 as comprising a tape cassette attachment device including a cassette holder 35 into which the tape cassette 1 is inserted and held, and a slide guide frame 40 vertically movably supporting the cassette holder 35 and itself supported on the side of a mechanical chassis 36 constituting the main body of the tape recorder so as to allow sliding reciprocating movement. The frame 40 is arranged to cause a vertical movement of the cassette holder 35 between a first position in which the frame is slidingly reciprocated by a driving electric motor 37 to enable the tape cassette 1 to be inserted into and detached from the cassette holder 35 and a second position in which the reel drive shaft insertion openings 12 and 13 in the bottom surface of the tape cassette 1 and reel drive shafts 38 and 39 on the mechanical chassis 36 are in register with each other.

On the side opposite to the tape cassette attachment position provided with the reel driving shafts 38, 39, there is provided a rotary magnetic head device 42 over which is wound the magnetic tape 7 extracted from the tape cassette 1 by means of the mechanical chassis 36. Between the tape cassette attaching position and the rotary magnetic head device 42, there are provided a pair of shift guide blocks 43, 44 constituting a loading mechanism for extracting the tape 7 from the tape cassette 1 and placing it about a tape guide drum of the rotary magnetic head device 42 for tape running. On each of the shift guide blocks 43, 44, there are provided a tape guide roller 45 and an inclined guide pin 46 about which the tape 7 is hooked and which guide and place the tape 7 about the tape guide drum of the rotary magnetic head device 42 over a predetermined angle of, for example, about 90°. The shift guide blocks 43, 44 are guided respectively by a pair of slide guide slots 47, 48 formed on the chassis 36 so as to be shifted from a position in which the roller 45 and the pin 46 face the spacing 19 of the tape cassette 1 attached to the tape cassette attachment position to a position on the lateral side of the head device 42. The shifting of the shift guide blocks 43, 44 is effected by the rotational driving in the mutually different directions of two loading rings 49 superimposed on the outer perimeter of the head device 42. These shift guide blocks 43, 44 are connected to the loading rings 49 by connecting arms (not shown) and are shifted by the loading rings 49 being driven into rotation by a loading motor 52. Each loading ring 49 is connected to the loading motor 52 so that drive power may be transmitted via connecting gearing 53 and a connecting belt 54.

Between the tape cassette attachment position and the rotary magnetic head device 42, there are rotatably mounted a pinch roller 56 pressured to a capstan shaft 55 to effect constant speed driving of the magnetic tape 7, a tape guide supporting arm 57 and a tension regulating arm of a tension regulator (not shown). The pinch roller 56, tape guide support arm 57 and the tension regulating arm are rotationally actuated, by the loading rings 49 shifting the shift guide blocks 43, 44 between a position towards the tape cassette attachment position and a position towards the magnetic head device 42, and are rotated with the shifting of the shift guide blocks 43, 44 to place the tape 7 about the head device 42 to effect loading along a predetermined tape route.

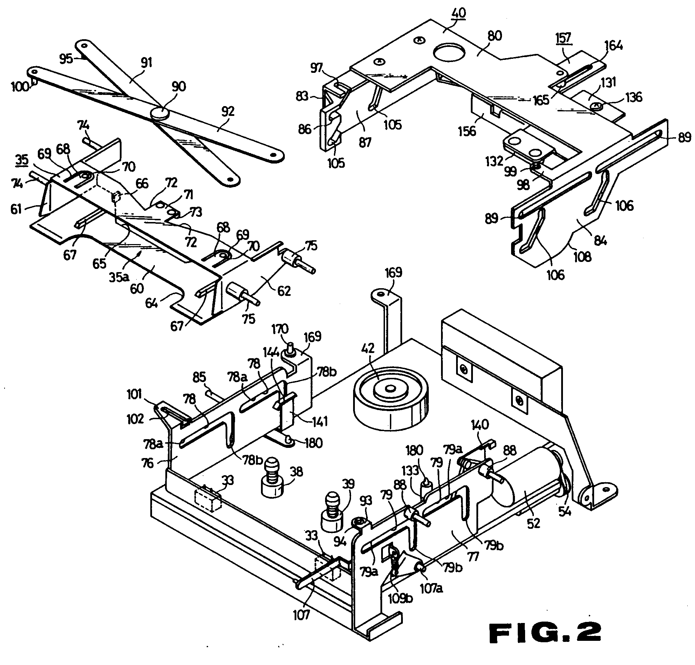

The tape cassette attachment portion on the chassis 36 provided with the reel drive shafts 38, 39 is provided with tape cassette attachment sensor switches 33 for sensing the attachment of the tape cassette 1, as shown in Figure 2.

The above-described cassette holder 35 constituting the cassette attachment device 41 is formed substantially as a box open at the front and rear sides to permit insertion and holding of the tape cassette 1. Thus, as shown in Figures 1 and 2, the cassette holder 35 is formed substantially by a bottom plate 60 on which is placed the tape cassette 1, upright side plates 61 and 62 on each side of the bottom plate 60 and an upper plate 63 opposite the bottom plate 60 and provided between the side plates 61 and 62. At the centre on the forward side edge of the bottom plate 60 is formed a recess 64 into which the reel drive shafts 38, 39 may intrude mounted with a transverse spacing in-between. At the centre on the rearward side edge is formed a trapezoidal recess 65, on both side edges of which are formed slide regulating lugs 66 abutting on the lugs 15 of the closure plate 14 of the tape cassette 1 so as to regulate the shifting of the closure plate 14. Towards the side plates 61, 62, the bottom plate 60 is provided with a pair of projecting ribs 67 for thrusting the lock member 21 retaining the closure plate 14 of the tape cassette 1.

The upper plate 63 is formed with a pair of cassette thrusting members 68 for resiliently pressuring and supporting the upper surface of the tape cassette 1 inserted and held by the cassette holder 35, the thrusting members 68 extending in the inserting direction of the tape cassette 1. The thrusting members 68 are formed integrally with the upper plate 63 by forming U-shaped slits 69 so that the resulting thrusting members 68 may be deformed resiliently. On the foremost parts of the cassette thrusting supporting plates 68 are provided tape cassette thrusting projections 70 typically of synthetic resin for protruding into the inside of the cassette holder 35. The cassette thrusting plate supporting members 68 are provided at transversely symmetrical positions for uniformly pressuring positions on the upper surface of the cassette corresponding to the positions of the recesses 20 formed in the closure plate 14 when the tape cassette 1 is inserted and held in the cassette holder 35.

At the centre on the rear side of the upper plate 63 is provided an engaging thrusting support member 71 engaging with the recess 32 on the upper surface of the cassette part 4 of the tape cassette 1 for resiliently thrusting and supporting the tape cassette 1. The support member 71 is resiliently formed so as to project from one rear side of the upper plate 63 by forming a pair of slits 72, on the rear side of the upper plate 63. The foremost part of the support member 71 is provided with an engaging projection 73 typically of synthetic resin engaging with the engaging recess 32 on the upper surface of the cassette part 4. The projection 73 is provided at a position of engagement with the recess 32 only when the tape cassette 1 is inserted and held in the cassette holder 35 as the closure plate 14 is retained by the slide control lugs 66 and the cassette part 4 performs a relative movement with respect to the closure plate 14 to expose the reel drive shaft insertion openings 12 and 13.

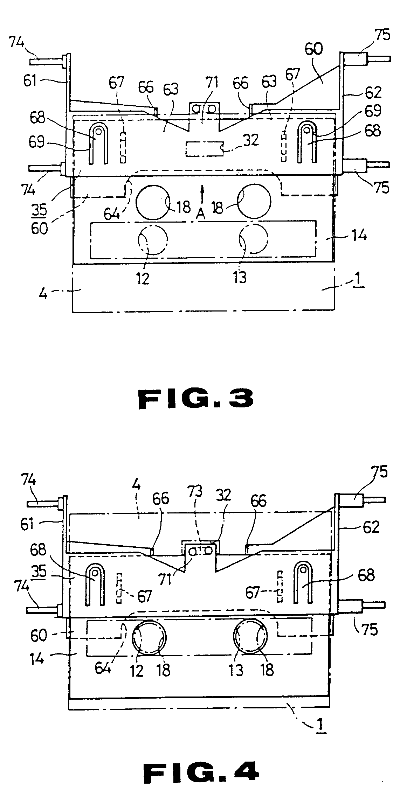

The tape cassette 1 is inserted from the side of the front lid 10 into the above-described cassette holder 35, as shown in Figure 3. As the tape cassette 1 is inserted in the direction of an arrow A in Figure 3 along the bottom plate 60 of the cassette holder 35, the tape cassette 1 is guided by the side plates 61 and 62 of the cassette holder 35 with respect to the transverse inserting position, until it is clamped by the bottom plate 60 of the cassette holder 35 and the pair of cassette thrusting support members 68, as shown in Figure 3. As the tape cassette 1 is inserted further into the interior of the cassette holder 35 in the direction of the arrow A, the ribs 67 on the bottom plate 60 are guided by the recesses 20 of the closure plate 14 of the tape cassette 1 to raise the lock member 21 retaining the closure plate 14 to release the retention of the closure plate 14 at the position in which the reel drive shaft insertion openings 12, 13 are closed. Following release of the retention of the closure plate 14, the slide control projections 66 at the rear side of the bottom plate 60 abut on the lugs 15 formed at the forward side of the closure plate 14 to check the movement of the closure plate 14 in the direction of the arrow A in Figure 3. When the tape cassette 1 is still further inserted into the cassette holder 35 in the direction of the arrow A, after the movement of the closure plate 14 has been checked, only the cassette part 4 is moved further inside the cassette holder 35, as shown in Figure 4. By this relative movement of the cassette part 4 and the closure plate 14, the reel drive shaft insertion openings 12, 13 of the cassette part 4 and the insertion openings 18 of the closure plate 14 are brought into register with each other thereby uncovering the reel drive shaft insertion openings 12, 13. The position of insertion of the cassette part 4 until the opening of the reel drive shaft insertion openings 12, 13 represents the insert hold position of the tape cassette 1 into the cassette holder 35 in which the reel drive shaft insertion openings 12, 13 and the recesses 64 on the bottom plate 60 are in register with each other to enable the reel drive shafts 38, 39 to be engaged with the tape reels 5, 6.

When the reel drive shaft insertion openings 12, 13 are opened for insertion and holding of the tape cassette 1, as described above, the thrusting support member 71 thrusts against and supports the tape cassette 1, with the end engaging projection 73 engaging in the engaging recess 32 on the upper surface of the cassette part 4. Therefore, the tape cassette 1, inserted into the cassette holder 35, is held by the support member 71, as the cassette part 4 is thrust and supported on both sides thereof by the pair of cassette thrusting and supporting members 68 and at the transverse centre thereof by the engaging thrust support member 71. As a result, the tape cassette 1 is inserted and held in a stable state, since the tape cassette 1 is prevented from floating in the vicinity of the centre of the cassette holder 35 and is brought into intimate contact with the bottom plate 60 after correction of any deformation of the tape cassette 1. Above all, the cassette holder 35 provides for holding of the tape cassette 1 with the engaging recess 32 on the upper surface of the cassette part 4 interengaging with the engaging projection 73 at the end of the engaging thrust support member 71, so that the insert and hold position of the tape cassette 1 is regulated accurately while the tape cassette 1 is prevented from accidental dropping to provide for reliable holding of the tape cassette 1.

The cassette holder 35 into which the tape cassette 1 is inserted and held is mounted as shown in Figures 2, 5 and 6, as slide guide support pins 74, 75 formed on the upper edge sides of each of the side plates 61, 62 are inserted into and supported by slide guide slots 78, 79 in each of supporting side plates 76, 77 provided on opposite sides of the chassis 36.

The slide guide slots 78, 79 are formed in the shape of a letter L, as shown in Figure 2, by horizontal slide guide slot sections 78a, 79a formed from the front end sides of the supporting side plates 76, 77 towards the inner mid portion and vertical slide guide sections 78b, 79b formed vertically downwardly from the inner side ends of the slot sections 78a, 79a. The cassette holder 35, having the slide guide support pins 74, 75 inserted into and supported by the above guide slots 78, 79, is shifted in the horizontal direction between a first position enabling the insertion and removal of the tape cassette 1 and a second position in which the reel drive shaft inserting openings 12, 13 in the bottom surface of the tape cassette 1 are in register with the reel drive shafts 34, 35 and in the vertical direction of engaging and disengaging the tape reels 5 and 6 with respect to the drive shafts 34 and 35, as the slide guide support pins 74, 75 are shifted and guided from the forward end sides of the horizontal guide slot sections 78a, 79a to the vertical guide slot sections 78b, 79b of the slide guide slots 78, 79.

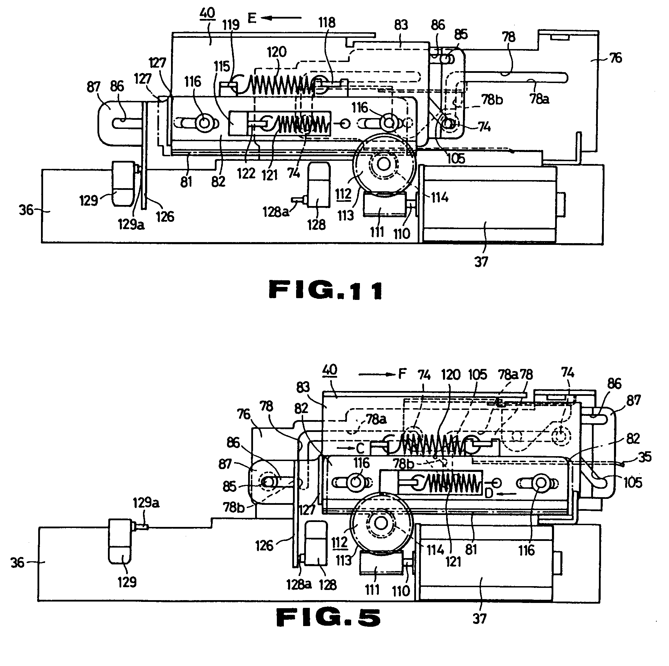

The above-described shifting of the cassette holder 35 in the horizontal and vertical directions under the guidance of the slide guide slots 78, 79 is performed by the reciprocating movement of the slide guide frame 40 supported for horizontal reciprocating sliding movement by means of the reciprocating sliding movement of the supporting side plates 76, 77. As shown in Figures 2 and 5, the slide guide frame 40 provided for shifting the cassette holder 35 has the shape of a letter U and is formed on its one side with a depending rack gear attachment side plate 83 and on its other side with a slide side plate 84, these being joined together by an upper plate 80. A rack plate 82, formed on its one side with a rack gear 81 to which drive power is transmitted from the drive motor 37, is slidably attached to the side plate 83. On the inner surface facing the slide side plate 84 of the rack gear attachment side plate 83 is mounted a slide guide block 87 of synthetic resin in which there are longitudinally formed a pair of slide guide slots 86 engaged by a pair of slide guide pins 85 provided on the supporting side plate 76 of the chassis 36. A pair of slide guide slots 89 are formed longitudinally in the slide guide plate 84, these slots 89 being engaged by a pair of slide guide pins 88 provided on the other supporting side plate 77 of the chassis 36. The slide guide frame 40 is mounted for bridging between the supporting side plates 76 and 77, with the slide guide pins 85 engaging with the slide guide slots 86 formed in the slide guide block 87, and with the slide guide pins 88 engaging in the slide guide slots 89 formed in the slide side plate 84.

Referring to Figure 2, the slide guide frame 40 is connected to the supporting side plates 76, 77 by a pair of opening/closing arms 91, 92, having its centre portion supported by a pivot shaft 90 so that the slide guide frame 40 may perform a positive reciprocating sliding movement while being maintained in the horizontal position with respect to the chassis 36. The arm 91 has its one end pivotally supported by a fixed supporting shaft 94 provided on an attachment supporting piece 93 formed on the front side upper surface of the other supporting side plate 77 by bending as shown in Figure 2. The arm 91 is formed at the other end with a depending guide shaft 95 which is engaged in an elongate aperture 97 formed in a bent piece 96 integral with the upper edge of the side plate 83 of the slide guide frame 40. The elongate aperture 97 has its long axis lying orthogonally to the shifting direction of the slide guide frame 40. The other arm 92 interconnects the slide guide frame 40 and the support side plate 76 having its one end pivotally supported by a fixed support shaft 99 provided on a mounting shaft support 98 formed on the upper edge of the slide guide side plate 84 of the slide guide frame 40 by bending, and by having its other end formed with a depending guide shaft 100 engaging in an elongate aperture 102 formed in a bent piece 101 formed at the upper edge of the forward side of the support side plate 76. The elongate aperture 102 has its long axis lying in a direction orthogonal to the shifting direction of the slide guide frame 40.

The opening/closing arms 91, 92, each having one end supported by the respective fixed supporting shafts 94, 99 and having the guide shafts 95, 100 at the other ends engaged in the apertures 97, 102, are operated for opening/closing about the pivot 90 as centre, as the guide shafts 95, 100 are slidingly guided by the apertures 97, 102, with the ends thereof pivotally supported by the fixed shafts 94, 99 as the fixed supporting points. The slide guide frame 40, thus connected to the support side plates 76, 77 by the opening/closing arms 91, 92 in turn each supported at one end by the fixed support shafts 94, 99, is slidingly reciprocated parallel to the chassis 36 with the side of the fixed support shafts 94, 99 as the slide reference.

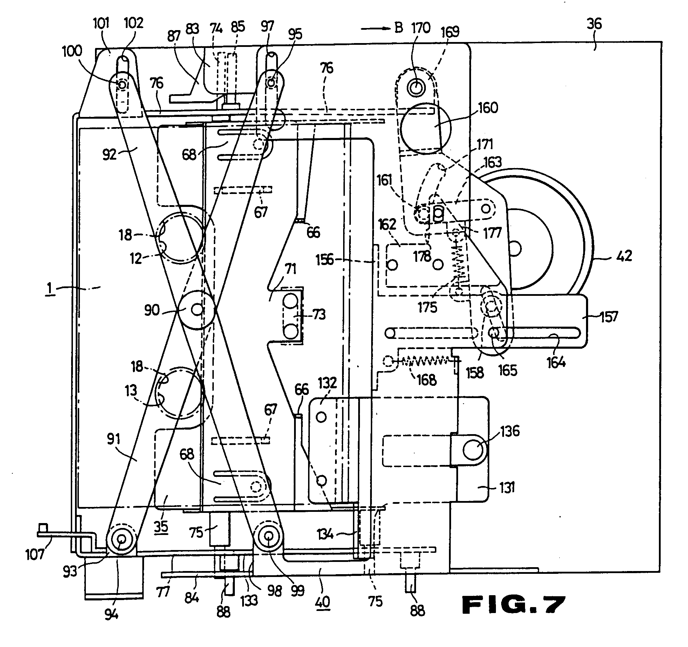

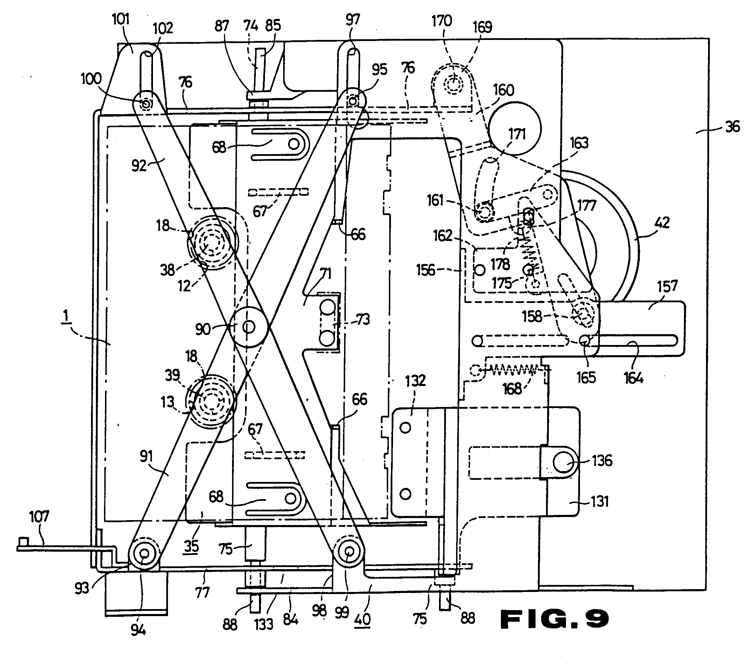

The cassette holder 35 is supported by the slide guide frame 40, and therefore is reciprocatingly supported with respect to the chassis 36, so that the cassette holder 35 may be moved both horizontally and vertically to follow the reciprocating sliding of the slide guide frame 40. Thus the cassette holder 35 is supported by the slide guide frame 40 so that it is moved in the horizontal direction between the first position of enabling the insertion and removal of the tape cassette 1 shown in Figures 1, 5 and 6 and the second position in which the reel drive shaft insertion openings 12, 13 on the bottom side of the tape cassette 1 and the reel drive shafts 38, 39 are in register with each other as shown in Figures 7 and 8, and in the vertical direction for engagement and disengagement of the tape reels 5, 6 with the reel drive shafts 38, 39 as shown in Figures 8 to 11.

The slide guide block 87 and the slide side plate 84 of the slide guide frame 40 are formed with a pair of inclined cam slots 105 and another pair of inclined cam slots 106, as shown in Figures 2, 5 and 6. The cassette holder 35 is supported by the slide guide frame 40 so as to be shifted horizontally and vertically, as discussed hereinabove, by the foremost parts of the slide guide support pins 74, 75 inserted in the slide guide slots 78, 79 formed in the support side plates 76, 77 being engaged in the inclined cam slots 105, 106.

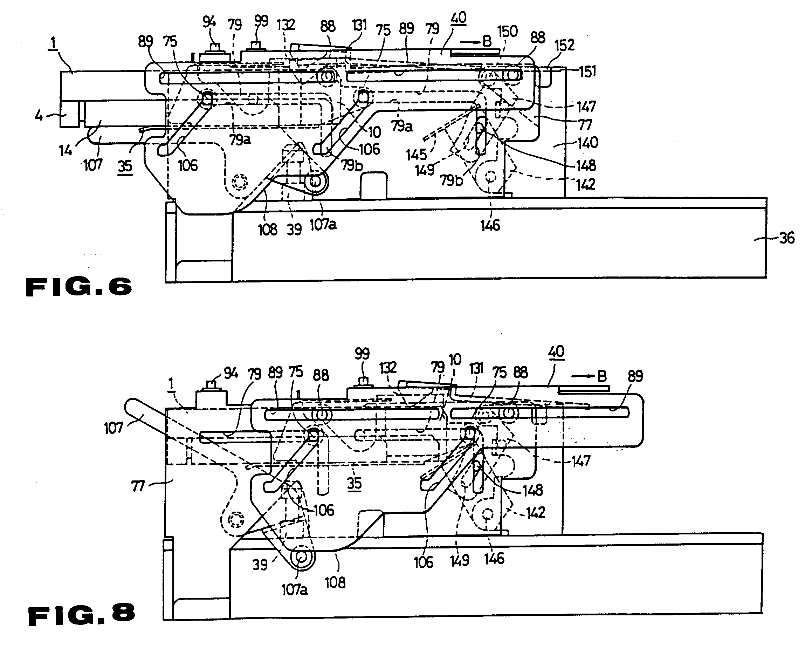

While the paired opening/closing arms 91, 92 are opened as shown in Figures 7 and 9, and while the slide guide pins 85, 88 are reciprocated along the direction shown by an arrow B shown in Figures 1 and 6 within the extent of the slide guide slots 86, 89, the slide guide frame 40 shifts the cassette holder 35 from the first position of enabling the insertion and removal of the tape cassette 1, shown in Figures 1 and 6, in which the cassette holder 35 is advanced with respect to the chassis 36, to the second position of registry of the reel drive shaft insertion openings 12, 13 on the bottom surface of the tape cassette 1 inwardly of the chassis 36 with the reel drive shafts 34, 35, as shown in Figures 7 and 8, as the slide guide support pins 74, 75 are guided along the slide guide slots 78, 79, at the same time that the slide guide frame 40 also lowers the cassette holder 35 in the second position into engagement with the reel drive shafts 34, 35. Thus, when the slide guide frame 40 is moved to a position advanced with respect to the chassis 36 in which, with the opening/closing arms 91, 92 being open, the slide guide pins 85, 88 are positioned towards the inner ends of the slide guide slots 86, 89, the cassette holder 35 is supported at the first position in which the slide guide support pins 74, 75 are positioned at the forward side of the slide guide slots 78, 79.

The inclined cam slots 105, 106 are designed so that, when the slide guide frame 40 and the cassette holder 35 are in the first position shown in Figures 1 and 6, the slide guide support pins 74, 75 are engaged at the upper edges of the cam slots 105, 106 so that this engaging state is maintained during the time when the cassette holder 35 is shifted from the first position to the second position shown in Figures 7 and 8 to effect the shifting in unison with the slide guide frame 40. Thus, after the cassette holder 35 has reached the second position shown in Figures 7 and 8, the slide guide frame 40 must be shifted in the reciprocating direction shown by the arrow B in Figures 7 and 8, and the cassette holder 35 must be lowered towards the tape cassette attachment position, with the slide guide support pins 74, 75 being guided in the vertical slide guide slot sections 72b, 73b of the slide guide slots 72, 73. To this effect, the inclined cam slots 105, 106 are formed with a predetermined angle of inclination from the upper towards the lower edges of the slide guide block 87 and the slide side plates 84, through the height range of the vertical guide slot sections 72b, 73b, as shown in Figures 5 and 6. The inclination angle of these cam slots 105, 106 corresponds with that of the oblique side of an isosceles triangle having the height of the slot sections 72b, 73b at its one side, and is selected so as to lower the cassette holder 35 towards the tape cassette attachment position as the slide guide frame 40 is reciprocated through the height of the vertical guide lot sections 72b, 73b.

A cam surface 108 for opening/closing a lid opening/closing arm 107 pivotally mounted on the supporting side plate 77 is formed on the forward lower edge of the slide side plate 84 of the slide guide frame 40 for pivoting the lid opening/closing arm 107 which is arranged for opening/closing the opening/closing lid arranged in turn for opening/closing the tape cassette insertion and removal opening formed on the forward side of the outer casing of the tape cassette 1. The lid opening/closing arm 107 is rotatably supported by the support side plate 77 and is rotationally biased by a tension spring 109b so that an engaging pin 107a projectingly mounted at the proximal side of the arm 107 is brought into pressure engagement with the cam surface 108. The lid opening/closing arm 107 is rotationally actuated by the engaging pin 107a being moved on the cam surface 108 by the reciprocating movement of the slide guide frame 40, thereby opening or closing the opening/closing lid for opening/closing the tape cassette inserting/removal opening.

The slide guide frame 40, reciprocatingly driven with respect to the chassis 36 to effect the shifting of the cassette holder 35, is actuated for reciprocation by the driving electric motor 37 mounted to the lower edge of the chassis 36 as shown in Figure 5.

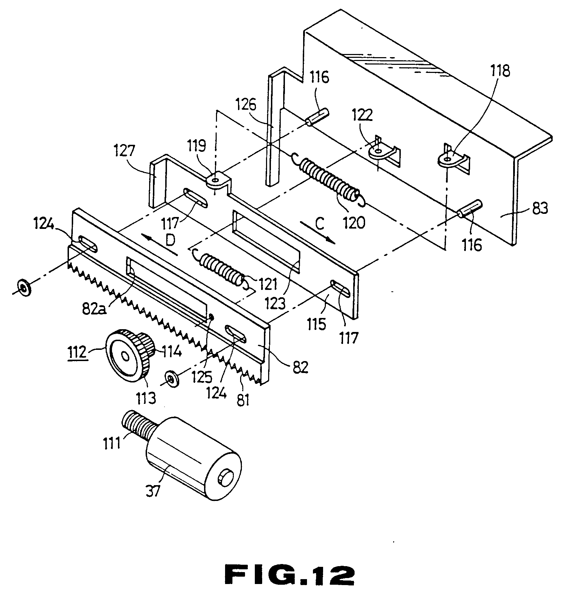

The driving motor 37 and the slide guide frame 40 are interconnected, as shown in Figure 5, by an intermediate gear 112 meshing with a worm gear 111 mounted on an output shaft 110 of the driving motor 37 and with the rack gear 81 of the rack plate 82 provided on the outer lateral side of the rack gear attachment side plate 83 of the slide guide frame 40. The intermediate gear 112 is formed by a large diameter bevel gear 113 and a small diameter pinion 114 integrally and coaxially connected, as shown in Figure 12, with the bevel gear 113 meshing with the worm gear 111 and the pinion 114 meshing with the rack gear 81 for interconnecting the worm gear 111 and the rack gear 81.

The rack plate 82 is attached to the rack gear attachment side plate 83, as shown in Figure 12, by means of a rack supporting plate 115 supported on the outer lateral side of the rack gear attachment side plate 83.

The rack supporting plate 115 supporting the rack plate 82 is supported by a pair of support pins 116 on the rack attachment side plate 83 passing through engaging guide openings 117 each having its long diameter arranged in the longitudinal direction, and is connected to and supported by the side plate 83 as it is biased in the direction shown by an arrow C in Figures 5 and 12, or in the returning direction of the slide guide frame 40, by means of a first limiting coil spring 120 installed under tension between a first retainer 118 on the side plate 83 and a second retainer 119 on the upper edge of the rack supporting plate 115. The bias shift position of the rack supporting plate 115 is regulated by the rear edge of a rectangular cut-out opening 123 in the planar surface of the supporting plate 115 being retained by a third retainer 122 on the side plate 83 retaining one end of a second limiting spring 121 biasing the rack plate 82. The rack plate 82 is supported in the manner of overlying the rack supporting plate 115, as the ends of the supporting pins 116 supporting the rack support plate 15 are inserted into respective engagement guide openings 124 each having the long axis in the longitudinal direction. The rack plate 82 is biased in the direction shown by an arrow D in Figures 5 and 12, which is the reverse of the bias shift direction of the rack support plate 115, that is the forward direction of the slide guide frame 40, by the second limiting spring 121 installed under tension between a third spring 122 at a rectangular cut-out 82a in the planar surface of the rack plate 82 and a spring retainer opening 125 in the rack plate 82, as well as being connected to the rack gear attachment side plate 83 by means of the rack support plate 115, such that the end of the rack plate 82 in the bias shift direction from the second limiting spring 121 abuts on a retainer 127 at one end of the rack supporting plate 115.

As the driving motor 37 is rotationally driven to reciprocate the slide guide frame 40 in the direction shown by an arrow E in Figure 11, the resulting drive power is transmitted to the slide guide frame 40 by means of the first limiting spring 120 for biasing the rack support plate 112 by means of the rack plate 82. As the drive motor 37 is driven so as to shift the slide guide frame 40 in the returning direction shown by an arrow F in Figure 5, the resulting driving force is transmitted to the slide guide frame 40 by means of the first limiting spring 121 for biasing and shifting the rack plate 82.

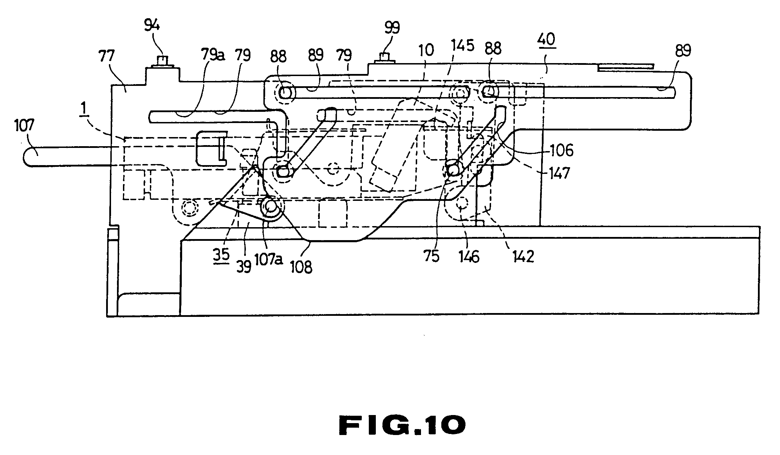

The starting and stopping of the driving motor 37 for reciprocating the slide guide frame 40 is effected by a return position sensor switch 128 and a tape cassette attachment sensor switch 129, provided on one side of the chassis 32 as shown in Figures 5 and 11. The return position sensor switch 128 is provided at a position in which a thrust piece 128a is thrust by a switch actuator 126 when the slide guide frame 40 is positioned at the forward side of the chassis 36 after shifting the cassette holder 35 to its first position, as shown in Figures 1, 5 and 6. The tape cassette attachment position sensor switch 129 is mounted at a position such that a thrust piece 129a is thrust by the switch actuator 126 when the slide guide frame 40 is at its retracted position shown in Figures 9, 10 and 11 in which it is positioned inwardly of the chassis 36 after lowering the cassette holder 35 to its tape attachment position. When the tape cassette 1 is inserted into and held in the cassette holder 35, with the slide guide frame 40 at the return position, the slide guide frame 40 is shifted slightly inwardly as will be later described, and the thrusting by the thrusting piece 128a of the switch 128 by the switch actuator 126 is released, so that the driving motor 37 starts to be driven in the forward direction for shifting the slide guide frame 40 forwards. As the slide guide frame 40 is shifted forwards by this driving of the motor 37, the cassette holder 35 is lowered to the tape cassette attachment position, and the tape cassette inserted and held in the cassette holder 35 is attached in the tape cassette attachment position, as shown in Figure 10; it is then sensed that the thrust piece 129a of the tape cassette attachment position sensor switch 129 is thrust by the switch actuator 126 and thus brought to its retracted position, the driving of the driving motor 35 then being terminated. At this time, the slide guide pins 85, 88 abut on the foremost part of the slide guide slots 86, 89, as shown in Figures 10 and 11, so that the shifting of the slide guide frame 40 is regulated in the forward direction. When an eject button (not shown) provided on the main body of the apparatus is actuated while the slide guide frame 40 is at the retracted position after the cassette holder 35 is lowered to the tape cassette attachment position, the driving motor 37 is driven in reverse to return the slide guide frame 40 towards the return position. It is then sensed that the thrust piece 128a of the tape cassette attachment position sensor 128 is thrust and brought to its retracted position by the switch actuator 126, and the driving of the motor 37 is therefore terminated. At this time, the slide guide pins 85, 88 abut on the rear ends of the slide guide slots 86, 89, as shown in Figures 10 and 11, to regulate the movement of the slide guide frame 40 in the returning direction.

When the driving motor 37 has been driven without being stopped immediately after the slide guide frame 40 has reached the retracted position with the cassette holder 35 having been lowered to the cassette attachment position, the rack plate 82 is rendered in alignment with the rack supporting plate 115, as shown by the phantom line in Figure 11, and is shifted with respect to the slide guide frame 40, while expanding the first limiting spring 121, to prevent overloading of the slide guide frame 40. When the driving motor 37 is driven without being stopped immediately after the slide guide frame 40 has reached the forward end of the chassis 36, with the cassette holder 35 having been shifted to the first position, the rack plate 82 is shifted with respect to the slide guide frame 40, as shown by the phantom line in Figure 5, while expanding the second limiting spring 21, to prevent overloading of the slide guide frame 40. When the driving motor 37 is driven further after the slide guide frame 40 is moved to the retracted position or to the forward end position of the chassis 36, and when the driving motor 37 is completely stopped after the rack plate 82 has been shifted with respect to the slide guide frame 40, the rack plate 82 is biased and shifted to its return position by the first or second limiting springs 121 or 122. The intermediate gear 112 is also rotated in the return direction by this movement of the rack plate 82 in the returning direction, to prevent so-called tightening caused by nipping of the bevel gear 113 to the pinion 111.

In order to provide protection for the tape cassette 1 and the reel drive shafts 38, 39 on the tape recorder and to provide for positive attachment to the tape cassette attachment position, there is also provided a tape cassette insertion holding sensor unit for enabling the shifting of the slide guide frame 40 only when it is detected that the tape cassette 1 has been inserted and is held in the cassette holder 35 while the closure plate 14 is shifted and the reel drive shaft insertion openings 12, 13 are open.

Referring back to Figure 2, this tape cassette insertion holding sensor unit comprises a tape cassette insertion sensor plate 131 attached to the lower surface of the supporting top plate 80 of the slide guide frame 40 towards the slide side plate 84. The sensor plate 131 is provided at its end with a mating thrust section 132 thrust by the upper surface of the tape cassette 1 inserted into the cassette holder 35, while being also provided on its one side with a projecting locking member 134 engaging in a recessed locking section 133 on the upper surface of the other support side plate when the slide guide frame 40 is at the forward side of the chassis 36 after having shifted the cassette holder 35 to the first position. The mating thrust section 132 comprises a semi-cylindrical section of synthetic material secured to the lower surface at the end of the cassette insertion sensor plate 131. The tape cassette insertion sensor plate 131 has its proximal side secured by a set screw 136 to the end of a spring plate 137 attached to the lower side of the connecting top plate 80 so that it is biased to turn about a support point established by the set screw 136 in such a manner that the mating thrust section 132 will protrude into the inside of the cassette holder 35. Thus, when the slide guide frame 40 is at the forward side of the chassis 36 having shifted the cassette holder 35 to the first position, the tape cassette insertion sensor plate 131 thrusts and biases the locking member 134 upwards, as shown in Figure 1, into engagement with the locking section 133 to lock the forward shifting of the slide guide frame 40 with respect to the supporting side plate 77.

The mating thrust section 132 of the tape cassette insertion sensor member 131 is provided at a position such that it is thrust upwards only by the tape cassette 1 inserted and held in the cassette holder 35 with the reel drive shaft insertion openings 12, 13 being opened. That is, the mating thrust section 132 is provided at a position more inward in the main body of the apparatus than the position at which the slide control projections 66 of the cassette holder 35 abut the lugs 15 of the closure plate 14 to control the shifting of the closure plate 14. Thus only when the closure plate 14 has shifted with respect to the cassette part 4 so that the reel drive shaft insertion openings 12, 13 are opened completely can the tape cassette arrive at the mating thrust section 132.

The insertion of the tape cassette 1 may be sensed by the above-described tape cassette insertion holding sensor plate 131 in the following manner. Assuming that with the slide guide frame 40 at the forward side of the chassis 36 and the cassette holder 35 shifted to the first position as shown in Figure 1, the tape cassette 1 is introduced from the side of the front lid 10, with the ribs 57 of the bottom plate 60 of the cassette holder 35 engaging in the recessed grooves 20, until the lugs 15 at the end of the closure plate 14 abut on the slide control projections of the bottom plate 10. At this time, the mating thrust section 132 slightly abuts on the forward end on the upper surface of the cassette part 4. However, at this time, the mating thrust section 132 only abuts on the cassette part 4 without being thrust by the cassette part 4.

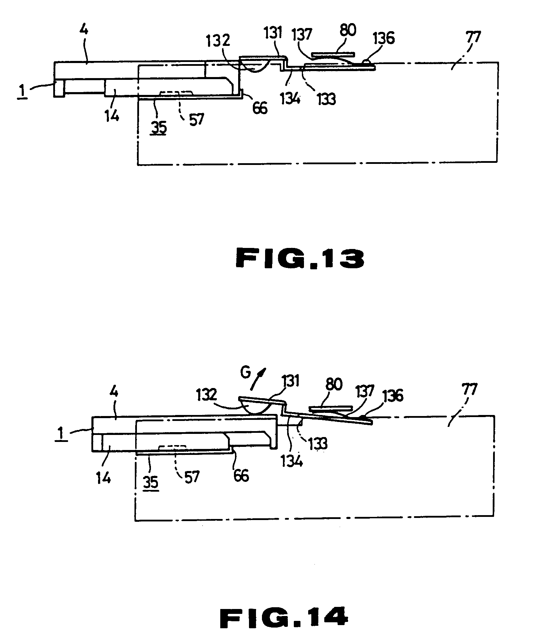

When the cassette part 4 is further inserted a predetermined amount into the inside of the cassette holder 35 with respect to the closure plate 14 for opening the reel drive shaft insertion openings 12, 13, the mating thrust section 132 is thrust by the upper surface of the cassette part 4, the tape cassette insertion sensor member 131 being rotationally actuated upwardly along an arrow G shown in Figure 14 against the bias of the spring plate 137. It is only when the reel drive shaft insertion openings 12, 13 are opened completely that the locking member 134 of the sensor plate 131 is disengaged from the locking section 133 on the support side plate 77 provided on the chassis 36. In other words, when the reel drive shaft insertion openings 12, 13 are not opened completely, the tape cassette insertion sensor plate 131 is turned only slightly without the locking member 134 being disengaged from the locking section 133. Thus the slide guide frame 40 cannot inadvertently be brought to its reciprocating state, and is not moved forwardly.

When the slide guide frame 40 is unlocked and its forward movement is enabled, such forward movement of the slide guide frame 40 allows the cassette guide frame 40 to be shifted towards the tape cassette attachment position of the cassette holder 35. That is, the forward movement of the slide guide frame 40 is enabled when the tape cassette 1 is inserted and held in the cassette holder 35, with the reel drive shaft insertion openings 12, 13 being opened.

The main body of the tape recorder is provided with a front lid opening unit arranged to open the front lid 10 of the tape cassette 1 against the bias of the torsion coil spring 11 in operative association with the attachment operation of the tape cassette 1 in the tape cassette attachment position. The front lid opening unit is made up of a pair of lid opening members 141, 142 arranged to rotate the front lid 10 of the tape cassette 1 inserted into the cassette holder 35 in the opening direction when the cassette holder 35 is shifted by the slide guide frame 40 from the first position to the second position and the slide guide frame 40 is further moved forwards to lower the cassette holder 35 towards the tape cassette attachment position. As shown in Figures 2 and 6, these lid opening members 141, 142 are provided on the chassis 36, facing towards the cassette holder 35 when shifted towards the tape cassette attachment position.

The lid opening member 141 is fixedly mounted to the chassis 36 in such a manner that a thrust section 144 provided at the end side will face the lower edge of one side of the front lid 10 of the tape cassette 1 inserted and held in the cassette holder 35 when at the aforementioned second position. When the cassette holder 35 is lowered towards the tape cassette attachment position, the thrust section 144 abuts on the lower end edge of the front lid 10 of the tape cassette 1 to turn the front lid 10 in its opening direction against the bias of the torsion coil spring 11.

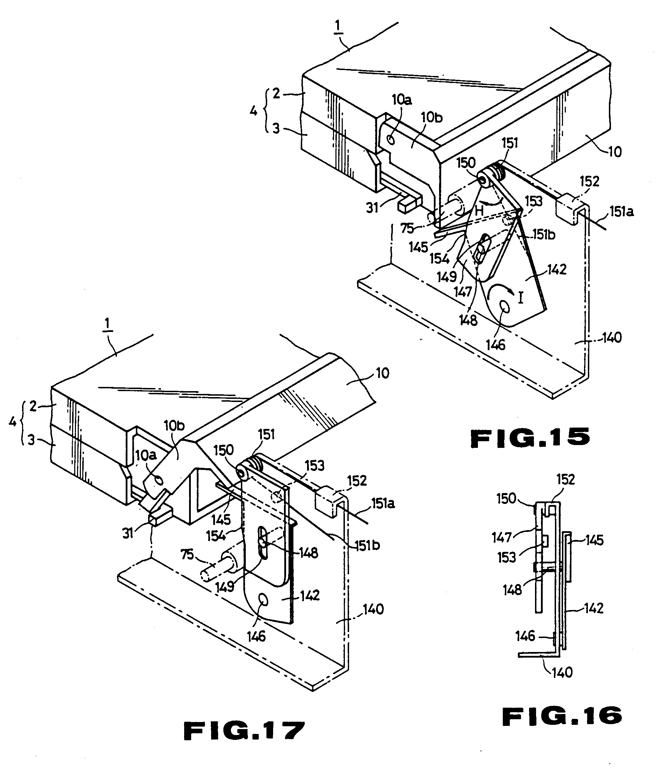

Referring to Figure 15, the other lid opening member 142 is an L-shaped plate provided at its end with a thrust section 145 abutting on the other lower edge of the front lid 10 of the tape cassette 1 so as to rotate the lid 10, and is pivotally mounted with the proximal side thereof being supported on a pivot shaft 146 provided on a lower position of a mounting plate 140 of the chassis 36. The lid-opening member 142 is connected to a rotating plate 147 which is rotated by an inner slide guide supporting pin 75 arranged to support the cassette holder 35 by the mounting plate 140 when the cassette holder 35 is lowered. That is, the lid opening member 142 is connected to the rotating plate 147 with a guide pin 148 on the one side inserted and engaged in an elongate aperture 149 formed on the main surface of the plate 147. The lid opening member 142 is pivoted about the pivot shaft 146 as the plate 147 is rotated and the guide pin 148 is slid and guided within the aperture 149. The plate 147 is rotatably mounted with one side of the proximal side thereof pivotally mounted to a pivot shaft 150 on the outer upper edge of the other supporting side plate 77. The plate 147 is biased in the direction of an arrow H shown in Figure 15 by a torsion coil spring 151 so that a mating rotating section 154 on one lateral side is positioned in the shifting trajectory of the slide guide support pin 75. The torsion coil spring 151 is wound about the pivot shaft 150 and has one arm section 151a retained by a spring retainer 152 at the upper edge of the mounting plate 140 while having its other arm 151b retained by a spring pin 153 provided on the plate 147. The other lid opening member 142 connected to the rotating plate 147 is biased to be turned by the rotary biasing of the rotating plate 147 so that the end thrust section 145 is extended in the descending direction of the cassette holder 35 to face the lower edge of the front lid 10 of the tape cassette 1. As the cassette holder 35 is lowered from the second position shown in Figure 8 towards the tape cassette attachment position shown in Figure 10, the mating rotating section 154 is thrust by the slide guide supporting pin 75, with the rotating plate 147 being turned in the direction opposite to the direction shown by the arrow H in Figure 15 against the bias of the spring 151. When the plate 147 is turned, the lid opening member 142 is turned in the direction shown by an arrow I in Figure 15 which is opposite to the rotating direction of the lid 10, as the pin 148 is guided in the aperture 149, the thrust section 145 turning the lid 10 against the bias of the torsion coil spring 11 to open the front side of the cassette part 4 as shown in Figures 10 and 17.

Although the lid opening member 141 is secured to the chassis 36, it may also be turned in operative association with the descent of the cassette holder 35, in similar manner to the other lid opening member 142.

The tape recorder is provided with a tape cassette discharge unit for projecting the tape cassette 1 out of the cassette holder 35 to the removal position in the course of the cassette eject operation during which the cassette holder 35 holding the inserted tape cassette 1 therein is shifted from the tape cassette attachment position towards the first position.

Referring to Figures 1, 2 and 18, this tape cassette discharge unit is provided with a cassette thrust lever 157 reciprocatingly supported on the slide guide chassis 40 with a cassette thrust section 156 facing the midportion on the rear side facing the tape cassette insertion opening 35a on the front side of the cassette holder 35, a rotating lever 160 rotatably supported by the chassis 36 and connected to the cassette thrusting lever 157 with a guide pin 158 on the cassette thrusting lever 157 engaging in a guide groove 159, and a cam lever 163 carrying a cam follower 161 and supported rotatably by the rotating lever 160, with the cam lever 163 being biased for rotation in a direction for abutting the cam follower 161 with a cam member 162 provided on the slide guide frame 40.

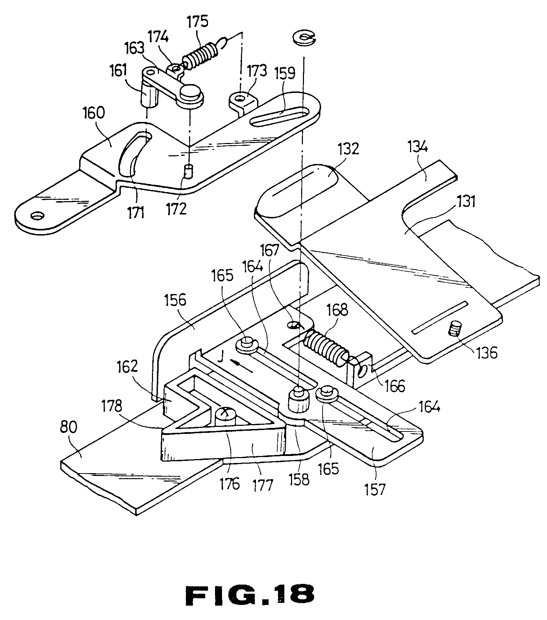

In order that the front lid 10 of the tape cassette 1 held in the cassette holder 35 will be thrust stably over a wide area, the cassette thrusting lever 157 constituting the tape cassette discharge unit has the cassette thrust section 156 wide at the forward end, so that it has the shape of a letter U, as shown in Figures 1, 2 and 18. The cassette thrusting lever 157 is reciprocatingly mounted in the reciprocating direction of the slide guide frame 40, with the slide guide pins 165 on the lower side of the connecting support plate 80 of the slide guide frame 40 engaging in the longitudinally extending slide guide slots 164 so that the cassette thrust section 156 faces the midportion of the cassette holder 35. The cassette thrusting lever 157 is biased to be shifted in a direction away from the cassette holder 35 or in a direction shown by an arrow J in Figures 1 and 18 by a tension spring 168 retained between a spring retainer 166 on the rear side of the plate 80 of the slide guide frame 40 and the spring retaining opening 167 on the front side of the cassette thrusting lever 157. The cassette thrust section 156 is held at this time at a predetermined distance from the front side of the tape cassette 1 so as not to thrust the tape cassette 1 inserted and held in the cassette holder 35.

The rotating lever 160 is pivotally mounted, as shown in Figures 1 and 18, with its proximal side pivotally supported by a supporting shaft 170 of a supporting member 169 on the upper rear side of the supporting side plate 76 attached to the chassis 36. The lever 160 is biased by a tension spring 168, biasing the cassette thrusting lever 157, so that the lever is biased for rotation about the supporting shaft 170 and in a direction opposite to the direction shown by an arrow K in Figure 1. Thus the rotating lever 160 is connected to the cassette thrusting lever 157, by the guide pin 158 of the cassette thrusting lever 157 being engaged with the elongate guide slot 159, and is pivoted about the supporting shaft 170 by the guide pin 158 being moved within the guide slot 159 with the shifting of the cassette thrusting lever 157.

The cam lever 163 is rotatably mounted to the lower surface of the rotating lever 160, with the cam follower 161 engaging in an arcuate guide groove 171 formed in the lever 160 and with its proximal side pivotally supported by a supporting shaft 172 provided on the rotation lever 160. The cam lever 163 is urged to be turned in a direction of abutting the cam follower 161 with the cam member 162 provided on the lower surface of the plate 80 of the slide guide frame 40, or in the direction shown by an arrow L in Figure 1, by a tension spring 175 installed under tension between a spring retainer 173 of the rotating lever 160 and a spring retainer 174 of the cam lever 163.

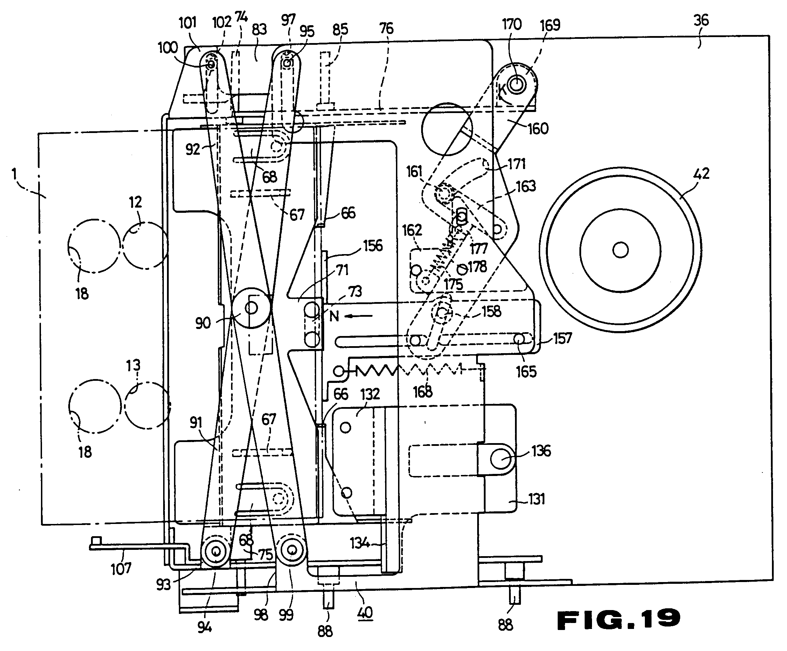

The cam member 162 abutted and engaged by the cam follower 161 may be formed as a moulding of synthetic resin, and is mounted via a supporting pin 176 to the lower side of the connecting supporting plate 80 of the slide guide frame 40. The cam member 161 is provided with a first cam surface 177 which, when the slide guide frame 40 is reciprocated to shift the cassette holder 35 from the first position shown in Figure 1 to the second position shown in Figure 7, thrusts the cam follower 161, rotates only the cam lever 163 against the bias of the tension spring 175, and releases the abutting engagement in the process of lowering the cassette holder 35 towards the tape cassette attachment position after the slide guide frame 40 has shifted the cassette holder 35 to the second position. The first cam surface 177 is formed as an inclined cam surface inclined at a predetermined angle in the reciprocating direction of the slide guide frame 40. The cam member 162 is also provided with a second cam surface 178 which is arranged to bring the cam follower 161 into pressure engagement with the cam member during the time that the cassette holder 35 with the slide guide frame 40 in the state of having been lowered to the side of the tape cassette attachment position is raised to the second position which is elevated relative to the tape cassette attachment position. The second cam surface 178 is also arranged to rotate the cam lever 163 in the rotational bias direction by the tension spring 175 during the time that the cassette holder 35 is shifted from the second position towards the first position to turn the lever 160 towards the cassette holder 35 in the direction shown by the arrow K in Figure 19 by means of this cam lever 163. The second cam surface 178 is formed so as to be normal to the reciprocating direction of the slide guide frame 40, and is of such a length as to release the engagement of the cam follower 161 during the time that the slide guide frame 40 is returned to shift the cassette holder 35 to the first position after the cam lever 161 has turned a predetermined amount.

In the above-described tape cassette discharge mechanism, when the slide guide frame 40 is moved forwards to shift the cassette holder 35 from the first position to the second position, the first cam surface 177 causes the cam lever 163 to be turned against the bias of the tension spring 175. At this time, the cam lever 163 is turned with the cam follower 161 being guided by the arcuate guide groove 171, the lever 160 is not given the rotational bias and is maintained in the inoperative position, while the cassette thrusting lever 157 is also maintained in the inoperative position. Therefore, in the course of attachment of the tape cassette 1 to the tape cassette attachment position, the tape cassette 1 inserted and held in the cassette holder 35 is not thrust in the discharge direction.

During the time that the slide guide frame 40 is returned to shift the cassette from the second position to the first position, the cam lever 163 is turned in the direction of the rotational bias by the tension spring 175, in the direction of an arrow L, as shown in Figures 7 and 19, so that the cam follower 161 is pressured on to the end in the rotational direction of the arcuate guide slot 171. Also the cam follower 161 is pressured to and engaged with the second cam surface 178, so that, as the slide guide frame 40 is shifted in the return direction, the rotating lever 160 and the cam lever 163 are turned as one towards the cassette holder 35 in the direction of the arrow K in Figures 1 and 19, with the supporting shaft 170 as centre. When the rotating lever 160 is turned in this manner, the cassette thrusting lever 157 interconnected with the rotating lever 160 with the engaging pin 158 engaging in the guide groove 159 intrudes towards the inside of the cassette holder 35 in the direction of an arrow N in Figure 19 against the bias of the tension spring 168. The cassette thrust section 156 at the foremost part of the cassette thrusting lever 157 thrusts the front lid 10 of the tape cassette 1 inserted and held in the cassette holder 35 and closed by the return spring 11 to project the tape cassette 1 towards the tape cassette insertion/removal opening 35a of the cassette holder 35, thus enabling the tape cassette 1 to be removed via the cassette holder 35.

When projected out of the cassette holder 35, the tape cassette 1 provides for relative movement between the cassette part 4 and the closure plate 14 to close the reel drive shaft insertion openings 12, 13.

The state of attachment of the tape cassette 1 to the above-described DAT recorder is hereinafter explained.

In order to attach the tape cassette 1, the slide guide frame 40 is shifted to the forward end side of the chassis 36, as shown in Figures 1 and 6, to shift the cassette holder 35 to the first position to enable the insertion and removal of the tape cassette 1. In this state, the locking member 134 of the sensor plate 131 provided on the slide guide frame 40 is engaged with the locking section 133 formed in the other side plate 77, so that the slide guide frame 40 is locked against movement. The cassette holder 35 shifted by the slide guide frame 40 is also maintained in the above-described first position.

At this time, the tape cassette 1 is inserted into the cassette holder 35 from the front lid side via the insertion opening of an outer casing (not shown) of the tape recorder. The tape cassette 1 inserted into the cassette holder 35 is released from retention by the cassette part 4 of the closure plate 14, with the ribs 67 engaging in the grooves 20 in the closure plate 14, and is thrust and supported by the cassette thrust support members 68 and the bottom plate 60. As the tape cassette 1 is inserted further into the inside of the cassette holder 35, the lugs 15 of the closure plate 14 abut on the projections 66 to restrict the movement of the closure plate 14. As the tape cassette 1 is inserted still further into the inside of the cassette holder 35, the cassette part 4 is moved further inward with respect to the closure plate 14 until the insertion openings 18 in the closure plate 14 are in register with the reel drive shaft insertion openings 12, 13 on the bottom surface of the cassette part 4, thereby uncovering the openings 12, 13. At this time, the engaging projection 72 at the end of the engaging thrust support member 71 engages with the engaging recess 32 on the upper surface of the cassette part 4. The tape cassette 1, which has both its sides thrust and supported by the cassette thrust support members 68 and its central portion thrust and supported by the member 71, is controlled with respect to the inserting and holding position with respect to the cassette holder 35 by the engagement of the projection 72 with the recess 73. In addition, when the cassette part 4 is inserted so that the projection 72 is engaged with the recess 32, the mating thrust section 132 of the sensor member 131 is thrust upwards by the cassette part 4. As a result of such thrusting of the section 132, the sensor member 131 is pivoted upwards against the bias of the spring plate 137 to disengage the locking member 134 of the sensor member 131 from the locking section 133 of the side plate 77 to enable the shifting of the slide guide frame 40. At this time, the frame 40 is shifted slightly in the forward direction, and the slide member 126 provided on the frame 40, which was previously thrusting the thrusting member 128a of the return position sensor switch 128, is separated therefrom to release the thrust state of the thrusting member 128a, and the drive motor 37 is energised as a result of a signal from the return position sensor switch 128. The drive motor 37 therefore starts to drive in the forward direction.

At this time, the slide guide frame 40 is moved forward in the direction shown by the arrow B in Figure 1. The cassette holder 35 supported by the slide guide frame 40 is shifted as one with the guide frame 40 from the first position to the second position as shown in Figures 7 and 8 in which the reel drive shaft inserting openings 12, 13 are in register with the reel drive shafts 38, 39. As the driving motor 37 is driven further in the forward direction to shift the slide guide frame 40 further in the forward direction shown in Figure 9, the cassette holder 35 is lowered towards the tape cassette attachment position, as the supporting pins 74, 75 are guided within the inclined cam grooves 105, 106 of the slide guide frame 40. The tape cassette 1 inserted and held in the cassette holder 35 is attached at the predetermined tape cassette attachment position with the drive shafts 38, 39 engaging with the tape reels 5, 6 under the restriction of the attachment position by the tape cassette positioning pins 180.

When the slide guide frame 40 is moved forwards until the cassette holder 35 is lowered to the tape cassette attachment position, the thrusting member 129a of the sensor switch 129 is thrust to terminate the driving of the motor 37 in the forward direction to complete the attachment of the tape cassette 1.

As the cassette holder 35 is lowered towards the tape cassette attachment position, the thrust sections 144, 145 of the lid opening sections 141, 142 abut on either side on the lower edge of the front lid 10 of the tape cassette 1 to effect pivoting of the lid 10 thereby opening the front side of the cassette part 4, the magnetic tape 7 extending across the front side being exposed to the outside to enable the extraction thereof by the loading system.

During attachment of the tape cassette 1, the tape attachment sensor switches 33 are thrust by the tape cassette 1 to detect the attachment of the tape cassette 1 to start the driving of the loading motor 52.

As the front lid 10 is opened and the tape cassette 1 is attached at the tape cassette attachment position, the shift guide blocks 43, 44 of the loading unit start to be shifted from the tape cassette attachment position towards the magnetic head device 42. The loading operation is then performed, taking up the magnetic tape 7 about the tape guide drum of the magnetic head device 42 and extracting the tape 7 to cause it to run along a predetermined route. After termination of the loading operation, the tape recorder is ready for recording and/or reproducing predetermined information signals.

The state of removing the tape cassette 1 attached to the predetermined tape cassette attachment position from the tape recorder is hereinafter explained.

In order to remove the tape cassette 1, the eject button provided on the main body of the apparatus is actuated. The loading unit is therefore actuated to retract the tape 7 extracted on to the predetermined tape route into the cassette part 4. After such retraction of the magnetic tape 7, the driving motor 37 is driven in reverse. The slide guide frame 40 starts to be moved in the return direction to elevate the lowered cassette holder 35 towards the second position shown in Figure 8. During this elevation of the cassette holder 35, the front lid 10 of the tape cassette 1 is rotated in the return direction by the coil spring 11 to close the front side of the cassette part 4.

As the slide guide frame 40 is shifted further in the return direction after the cassette holder 35 is raised to the second position, the cam lever 163 engaging the cam follower 161 with the second cam surface 178 of the cam member 162 is pivoted in the bias direction of the tension spring 175 to turn the rotating lever 160 towards the cassette holder 35 in the direction shown by the arrow K in Figure 19. As a result of such turning of the rotating lever 160, the cassette thrusting lever 157 is thrust towards the inside of the cassette holder 35 in the direction shown by the arrow N in Figure 19, against the bias of the tension spring 168, for thrusting the tape cassette 1 inserted and held in the cassette holder 35 by the cassette thrust section 156. When the tape cassette 1 is thrust in this manner, the cassette part 4 is shifted towards the tape cassette insertion/removal opening 35a of the cassette holder 35, while disengaging the end projection 72 of the thrusting and supporting member 71 from the engaging recess 32. The cassette part 4 performs a relative movement with respect to the closure plate 14 to reach the initial state of closing the reel drive shaft insertion openings 12, 13. The tape cassette 1 is further thrust by the cassette thrust section 156 and projected via the tape cassette insertion/removal opening 35a so that it is projected at least in part out of the outer casing via the tape cassette insertion opening formed in the outer casing to enable the tape cassette 1 to be taken out of the cassette holder 35.

As the slide guide frame 40 is returned for shifting the cassette holder 35 to the first position shown in Figures 1 and 6, the switch operating member 126 thrusts the thrusting member 128a of the sensor switch 128, as shown in Figure 5, to sense that the slide guide frame 40 has reached the return position and therefore discontinue the driving of the motor 37 in reverse thereby terminating the removal of the tape cassette 1.

As the slide guide frame 40 is moved further in the return direction after the cassette thrusting lever 157 has shifted the tape cassette 1 by an amount sufficient to project the tape cassette 1 out of the cassette holder 35, the cam follower 161 is disengaged from its abutment with the second cam follower 178. With the cam follower 161 thus disengaged, the cassette thrusting lever 157 is returned to its initial position retracted with respect to the cam holder 35 under the bias of the tension spring 168, as shown in Figure 1.

From the foregoing, it will be seen that an arrangement is provided in which, when the tape cassette is inserted into the cassette holder with the reel drive shaft insertion openings in the bottom of the cassette part being open, the tape cassette insertion sensor member locking the slide guide frame shifting the cassette holder by the tape cassette is lifted against the bias of the bias means to release the locking of the slide guide frame, thereby enabling the shifting of the slide guide frame to effect the shifting of the cassette holder and the attachment of the tape cassette. In this manner, safe and reliable tape cassette attachment may be realised, while protection of the mechanical portions of the magnetic recording/reproducing apparatus and the tape cassette as well as sensing of the insertion of the tape cassette into the cassette holder may be achieved in a simple manner.

Since the tape cassette insertion sensor member is actuated by the tape cassette when the cassette part is moved relative to the closure plate to open the reel drive shaft insertion openings, the relative movement between the cassette part and the closure plate and hence tape cassette thrusting are not performed when, for example, the tape cassette is inadvertently inserted back to front, thus preventing the mistaken insertion of the tape cassette.

## Claims

1. A tape cassette attachment device in combination with a tape cassette (1) and comprising:
a cassette holder (35) to retain the tape cassette (1), which tape cassette (1) rotatably accommodates a pair of tape reels (5, 6) having a magnetic tape (7) wound thereon and has a closure plate (14), movable between a closed position covering a pair of reel drive shaft insertion openings (12, 13) formed at least in the bottom surface of the tape cassette (1) and an open position uncovering the reel drive shaft insertion openings (12, 13), mounted on the outer bottom surface of the tape cassette (1), and a pivotable lid (10) provided to open or close an aperture (19) in the front of the tape cassette (1), the cassette holder (35) including control projection means (66) on a bottom plate (60) thereof, the control projection means (66) controlling movement of the closure plate (14) in opposition to insertion movement of the tape cassette (1) and shifting the closure plate (14) from the closed position to the open position when the tape cassette (1) is inserted;
a slide guide frame (40) to support the cassette holder (35) for vertical movement and being supported for reciprocation with respect to a chassis (36), the slide guide frame (40) being reciprocatable between a first position in which the tape cassette (1) may be inserted into or detached from the cassette holder (35) and a second position in which the tape reels (5, 6) of the tape cassette (1) are in register with reel drive shafts (38, 39) on the chassis (36), the cassette holder (35) being vertically shifted between the first position and the second position;
locking and holding means (133, 134) to lock and hold the slide guide frame (40) at the first position with respect to the chassis (36) to inhibit shifting of the slide guide frame (40); and
sensing means (131, 132) to sense tape cassette insertion and being operable to sense that the tape cassette (1) has been inserted to a determined position in the cassette holder (35), thereby releasing locking of the locking and holding means (133, 134);
characterised in that the sensing means (131, 132) to sense tape cassette insertion comprises a mating thrust section (132) provided at a position more inward in the apparatus than the position at which the control projection means (66) of the cassette holder (35) are provided, such that only when the closure plate (14) has been shifted so that the reel drive shaft insertion openings (12, 13) are opened completely can the tape cassette (1) abut the mating thrust section (132) to release the locking of the locking and holding means (133, 134).

2. A tape cassette attachment device according to claim 1, wherein the sensing means (131, 132) to sense tape cassette insertion comprises a tape cassette insertion sensor member (131) movably mounted to the slide guide frame (40), the sensor member (131) including the mating thrust section (132) to be thrust and controlled by the tape cassette (1), and the locking and holding means comprises a locking member (134) engageable with a locking section (133) provided on a support side plate (77) on the chassis (36) movably supporting the slide guide frame (40).

3. A tape attachment device according to claim 1 or claim 2, wherein the cassette holder (35) includes engaging thrust support means (72) on an upper surface thereof, the engaging thrust support means (72) being engageable in a rectangular engagement recess (32) on an upper surface of the tape cassette (1) upon insertion of the tape cassette (1), the tape cassette insertion sensing means (131, 132) being positioned so as to be thrust and controlled by the tape cassette (1) only after the tape cassette (1) has been inserted into the cassette holder (35) and the engagement recess (32) has been completely engaged by the engaging thrust support means (72).

## Patentansprüche

1. Vorrichtung zur Fixierung einer Bandkassette in Kombination mit einer Bandkassette (1)
mit einem Kassettenhalter (35) zur Halterung der Kassette (1), in der zwei Bandspulen (5, 6) drehbar gelagert sind, auf denen ein Magnetband (7) aufgewickelt ist, und die eine an der Aussenfläche des Bodens der Bandkassette (1) montierte Verschlußplatte (14) aufweist, die bewegbar ist zwischen einer Schließstellung, in der sie zwei zumindest in der Bodenfläche der Bandkassette (1) ausgebildete Spulenantriebswellen-Einführungsöffnungen (12, 13) abdeckt, und einer Öffnungsstellung, in der sie die Spulenantriebswellen-Einführungsöffnungen (12, 13) freigibt, sowie eine schwenkbare Klappe (10) zum Öffnen und Schließen einer Öffnung (19) in der Vorderseite der Bandkassette (1), wobei an einer Bodenplatte (60) des Kassettenhalters (35) Betätigungsvorsprünge (66) vorgesehen sind, die beim Einführen der Bandkassette (1) die Bewegung der Verschlußplatte (14) in Gegenrichtung der Einführungsbewegung der Bandkassette (1) bewirken und die Verschlußplatte (14) aus der Schließstellung in die Öffnungsstellung verschieben,
mit einem Gleitführungsrahmen (40) zur Lagerung des Kassettenhalters (35) bei einer vertikalen Bewegung, wobei dieser Gleitführungsrahmen (40) seinerseits so gelagert ist, daß er relativ zu einem Chassis (36) eine alternierende Bewegung ausführen kann und hin- und herbewegbar ist zwischen einer ersten Position, in der die Bandkassette (1) in den Kassettenhalter (35) eingesetzt oder aus diesem entnommen werden kann, und einer zweiten Position, in der die Bandspulen (5, 6) der Bandkassette (1) mit den Spulenantriebswellen (38, 39) auf dem Chassis (36) fluchten, wobei der Kassettenhalter (35) zwischen der ersten und der zweiten Position in vertikaler Richtung verschiebbar ist,
mit Verriegelungs- und Haltemitteln (133, 134), mit deren Hilfe der Gleitführungsrahmen (40) in der genannten ersten Position relativ zu dem Chassis (36) so blockiert und gehalten werden kann, daß ein Verschieben des Gleitführungsrahmens (40) verhindert ist,
sowie mit einer Sensoreinrichtung (131, 132) zum Abtasten der Bandkassetteneinführung, die in der Weise tätig werden kann, daß sie feststellt, wann die Bandkassette (1) in eine vorbestimmte Position in den Kassettenhalter (35) eingeführt ist, und die dabei die Blockierung der Verriegelungs- und Haltemittel (133, 134) löst,
**dadurch gekennzeichnet**,
daß die Sensoreinrichtung (131, 132) zum Abtasten der Bandkassetteneinführung ein eingepaßtes Schiebersegment (132) aufweist, das in einer Position angeordnet ist, die innerhalb des Geräts weiter innen liegt als die Position, an der sich der Betätigungsvorsprung (66) des Kassettenhalters (35) befindet, so daß die Bandkassette (1) nur dann an diesem eingepaßten Schiebersegment (132) zum Anschlag kommen kann, um die Blockierung der Verriegelungs- und Haltemittel (133, 134) zu lösen, wenn die Verschlußplatte (14) so verschoben ist, daß die Spulenantriebswellen-Einführungsöffnungen (12, 13) vollständig freigegeben sind.

2. Vorrichtung zur Fixierung einer Bandkassette nach Anspruch 1, bei der die Sensoreinrichtung (131, 132) zum Abtasten der Bandkassetteneinführung ein Bandkassetten-Einführungs-Sensorglied (131) aufweist, das an dem Gleitführungsrahmen (40) beweglich montiert ist und an dem das von der Bandkassette (1) anzustoßende und zu betätigende eingepaßte Schiebersegment (132) angeordnet ist, und bei der die Verriegelungs- und Haltemittel ein Verriegelungsglied (134) umfassen, das mit einem Verriegelungsabschnitt (133) in Eingriff bringbar ist, der an einer Trägerseitenplatte (77) auf dem Chassis (36) ausgebildet ist, an der der Gleitführungsrahmen (40) beweglich gehalten ist.

3. Vorrichtung zur Fixierung einer Bandkassette nach Anspruch 1 oder 2, bei der der Kassettenhalter (35) an einer Oberseite eine Mitnehmerschieber-Trägeranordnung (72) aufweist, die beim Einführen der Bandkassette (1) mit einem rechteckigen Mitnehmerausschnitt (32) auf der Oberseite der Bandkassette (1) in Eingriff bringbar ist, wobei die Sensoreinrichtung (131, 132) zum Abtasten der Bandkassetteneinführung so positioniert ist, daß sie nur dann von der Bandkassette (1) angestoßen und betätigt wird, wenn die Bandkassette (1) in den Kassettenhalter (35) eingeführt ist und die Mitnehmerschieber-Trägeranordnung (72) vollständig in den Mitnehmerausschnitt (32) eingreifen.

## Revendications

1. Dispositif de fixation de cassette à bande en combinaison avec une cassette à bande (1) et comportant :
un porte-cassette (35) destine à retenir la cassette à bande (1), laquelle cassette à bande (1) renferme de façon rotative une paire de bobines de bande (5, 6) ayant une bande magnétique (7) enroulée dessus et possède une plaque de fermeture (14), mobile entre une position fermée recouvrant une paire d'ouvertures d'insertion d'arbre d'entraînement de bobine (12, 13) formées au moins dans la surface inférieure de la cassette à bande (1) et une position ouverte découvrant les ouvertures d'insertion d'arbre d'entraînement de bobine (12, 13), montée sur la surface inférieure extérieure de la cassette à bande (1), et un volet pivotant (10) prévu pour ouvrir ou fermer une ouverture (19) à l'avant de la cassette à bande (1), le porte-cassette (35) comprenant des moyens de saillie de commande (66) sur une plaque inférieure (60) de celui-ci, les moyens de saillie de commande (66) commandant le mouvement de la plaque de fermeture (14) en opposition au mouvement d'insertion de la cassette à bande (1) et déplaçant la plaque de fermeture (14) de la position fermée vers la position ouverte lorsque la cassette à bande (1) est insérée;
un cadre de guidage coulissant (40) destiné à supporter le porte-cassette (35) pour un mouvement vertical et qui est supporté pour un mouvement alternatif par rapport à un châssis (36), le cadre de guidage coulissant (40) pouvant se déplacer de façon alternative entre une première position dans laquelle la cassette à bande (1) peut être insérée dans ou enlevée du porte-cassette (35) et une deuxième position dans laquelle les bobines de bande (5, 6) de la cassette à bande (1) sont en alignement avec des arbres d'entraînement de bobine (38, 39) sur le châssis (36), le porte-cassette (35) étant déplacé verticalement entre la première position et la deuxième position;
des moyens de blocage et de maintien (133, 134) destinés à bloquer et maintenir le cadre de guidage coulissant (40) dans la première position par rapport au châssis (36) afin d'empêcher le déplacement du cadre do guidage coulissant (40); et
des moyens de détection (131, 132) destinés à détecter l'insertion de cassette à bande et pouvant fonctionner de façon à détecter que la cassette à bande (1) a été insérée dans une position déterminée dans le porte-cassette (35), libérant ainsi le blocage des moyens de blocage et de maintien (133, 134);
caractérisé en ce que les moyens de détection (131, 132) destinés à détecter l'insertion de cassette à bande comportent une section de poussée correspondante (132) prévue dans une position davantage à l'intérieur de l'appareil que la position dans laquelle les moyens de saillie de commande (66) du porte-cassette (35) sont prévus, de telle sorte que la cassette à bande (1) peut buter contre la section de poussée correspondante (132) afin de libérer le blocage des moyens de blocage et de maintien (133, 134) uniquement lorsque la plaque de fermeture (14) a été déplacée de telle sorte que les ouvertures d'insertion d'arbre d'entraînement de bobine (12, 13) sont totalement ouvertes.

2. Dispositif de fixation de cassette à bande selon la revendication 1, dans lequel les moyens de détection (131, 132) destinés à détecter l'insertion de cassette à bande comportent un élément de détection d'insertion de cassette à bande (131) monté de façon mobile sur le cadre de guidage coulissant (40), l'élément de détection (131) comprenant la section de poussée correspondante (132) devant être poussée et commandée par la cassette à bande (1), et les moyens de blocage et de maintien comportent un élément de blocage (134) pouvant être engagé avec une section de blocage (133) prévue sur une plaque de support latérale (77) sur le châssis (36) supportant de façon mobile le cadre de guidage coulissant (40).

3. Dispositif de fixation de bande selon la revendication 1 ou 2, dans lequel le porte-cassette (35) comprend des moyens de support de poussée d'engagement (72) sur une surface supérieure de celui-ci, les moyens de support de poussée d'engagement (72) pouvant être engagés dans un renfoncement d'engagement rectangulaire (32) sur une surface supérieure de la cassette à bande (1) lors de l'insertion de la cassette à bande (1), les moyens de détection d'insertion de cassette à bande (131, 132) étant positionnés de façon à être poussés et commandés par la cassette à bande (1) uniquement une fois que la cassette à bande (1) a été insérée dans le porte-cassette (35) et que le renfoncement d'engagement (32) a été totalement engagé par les moyens de support de poussée d'engagement (72).
